# EUROPEAN PATENT APPLICATION

(11) **EP 4 723 014 A1**
(43) Date of publication of application: **08.04.2026**
(21) Application number: 24810077.8
(22) Date of filing: 16.04.2024
(51) Int. Cl.: G06Q 20/40

(54) **IDENTITY AUTHENTICATION**

(30) Priority: 24.05.2023 CN 202310594158
(71) Applicant: ALIPAY PAYMENT TECHNOLOGY CO., LTD., Shanghai 200120 (CN)
(72) Inventor: LI, Junji, Hangzhou, Zhejiang 310000 (CN)
(74) Representative: Winter, Brandl - Partnerschaft mbB
(86) International application number: PCT/CN2024/087886
(87) International publication number: WO 2024/239830

(57) **Abstract**

Embodiments of this specification disclose identity authentication methods and apparatuses, smart wearable devices, media, and program products. The method is applied to a smart wearable device, and the method includes: obtaining, by the smart wearable device, a target payment operation of a target user; and obtaining, by the smart wearable device in response to the target payment operation, target identity authentication information corresponding to the target user; and determining, by the smart wearable device based on the target identity authentication information, a target identity authentication result corresponding to the target user.

## Description

### TECHNICAL FIELD

This specification relates to the field of computer technologies, and in particular, to identity authentication methods and apparatuses, smart wearable devices, media, and program products.

### BACKGROUND

With increasing popularity of using a smart wearable device to perform a fund operation, more and more people are using the smart wearable device, and more and more people are targeting the smart wearable device. As a result, a vulnerability in the smart wearable device is constantly magnified. Currently, there are no measure for payment on the smart wearable device to cover financial losses of users once such a vulnerability is discovered. In addition, there is a relatively large difference between the smart wearable device and a terminal, and a solution on the terminal cannot be copied.

### SUMMARY

Embodiments of this specification provide identity authentication methods and apparatuses, smart wearable devices, media, and program products, so that when a user uses a smart wearable device to perform payment, identity authentication on the user can be separately performed on the smart wearable device to ensure security of an asset in the smart wearable device, with low resource occupation and a high level of security. The above-mentioned technical solutions are as follows:

According to a first aspect, an embodiment of this specification provides an identity authentication method. The method is applied to a smart wearable device and includes: obtaining, by the smart wearable device, a target payment operation of a target user; and obtaining, by the smart wearable device in response to the target payment operation, target identity authentication information corresponding to the target user; and determining, by the smart wearable device based on the target identity authentication information, a target identity authentication result corresponding to the target user.

In a possible implementation, after obtaining, by the smart wearable device, the target payment operation of the target user, and before obtaining, by the smart wearable device in response to the target payment operation, the target identity authentication information corresponding to the target user, the method further includes: determining whether the smart wearable device is in a target state before the target payment operation. Obtaining, by the smart wearable device in response to the target payment operation, the target identity authentication information corresponding to the target user includes: if yes, obtaining, in response to the target payment operation, the target identity authentication information corresponding to the target user.

In a possible implementation, after obtaining, by the smart wearable device, the target payment operation of the target user, and before obtaining, by the smart wearable device in response to the target payment operation, the target identity authentication information corresponding to the target user, the method further includes: determining whether a time interval between first time corresponding to the target payment operation and second time is greater than target duration, where the second time is used to represent time corresponding to a case that the smart wearable device performs identity authentication last time and the identity authentication succeeds. Obtaining, by the smart wearable device in response to the target payment operation, the target identity authentication information corresponding to the target user includes: if yes, obtaining, in response to the target payment operation, the target identity authentication information corresponding to the target user.

In a possible implementation, after obtaining, by the smart wearable device, the target payment operation of the target user, and before obtaining, by the smart wearable device in response to the target payment operation, the target identity authentication information corresponding to the target user, the method further includes: determining whether an unworn state exists after the smart wearable device performs identity authentication last time and the identity authentication succeeds. Obtaining, by the smart wearable device in response to the target payment operation, the target identity authentication information corresponding to the target user includes: if yes, obtaining, in response to the target payment operation, the target identity authentication information corresponding to the target user.

In a possible implementation, after obtaining, by the smart wearable device, the target payment operation of the target user, the method further includes: determining, by the smart wearable device, that identity authentication on the target user succeeds if the smart wearable device is not in a target state before the target payment operation, and/or a time interval between first time corresponding to the target payment operation and second time does not exceed target duration, and/or an unworn state does not exist after the smart wearable device performs identity authentication last time and the identity authentication succeeds, where the second time is used to represent time corresponding to a case that the smart wearable device performs identity authentication last time and the identity authentication succeeds.

In a possible implementation, the target identity authentication information includes target human body characteristic information and/or target behavior information; the target human body characteristic information includes at least one of the following: target blood oxygen information, target heart rate information, or target electrocardiogram information that corresponds to the target user; and the target behavior information includes at least one of the following: historical sleep information, historical exercise information, or historical movement track information that is monitored by the smart wearable device in a preset time period before the target payment operation.

In a possible implementation, determining, by the smart wearable device based on the target identity authentication information, the target identity authentication result corresponding to the target user includes: if a difference between the target human body characteristic information and a preset human body characteristic information is within a preset range, and/or the target behavior information satisfies a preset condition, determining that the target identity authentication result corresponding to the target user is that identity authentication succeeds, where the preset human body characteristic information is human body characteristic information corresponding to a first user who has payment permission of the smart wearable device.

In a possible implementation, before determining, by the smart wearable device based on the target identity authentication information, the target identity authentication result corresponding to the target user, the method further includes: obtaining recorded information corresponding to a first user who has payment permission of the smart wearable device. Determining, by the smart wearable device based on the target identity authentication information, the target identity authentication result corresponding to the target user includes: determining, by the smart wearable device based on the recorded information and the target identity authentication information, the target identity authentication result corresponding to the target user.

In a possible implementation, the target identity authentication information includes at least one of the following information: target fingerprint information, target face information, target PIN code information, target password information, or target identity code information, where an information type in the target identity authentication information is a part or all of information types in the recorded information.

In a possible implementation, before obtaining, by the smart wearable device, the target payment operation of the target user, the method further includes: obtaining recorded information entered by a first user who has payment permission of the smart wearable device; and

obtaining an information modification operation of a second user; and when it is determined, based on the recorded information, that identity authentication on the second user succeeds, modifying the recorded information in response to the information modification operation.

In a possible implementation, payment software is installed on the smart wearable device, and the target identity authentication result includes that identity authentication on the target user succeeds. Obtaining, by the smart wearable device, the target payment operation of the target user includes: obtaining, by the smart wearable device, the target payment operation of the target user based on the payment software. After determining, by the smart wearable device based on the target identity authentication information, the target identity authentication result corresponding to the target user, the method further includes: displaying a payment code in the payment software on a display of the smart wearable device.

According to a second aspect, an embodiment of this specification provides an identity authentication apparatus. The identity authentication apparatus is applied to a smart wearable device and includes: a first acquisition module, configured to obtain a target payment operation of a target user; a second acquisition module, configured to obtain, in response to the target payment operation, target identity authentication information corresponding to the target user; and a first determining module, configured to determine, based on the target identity authentication information, a target identity authentication result corresponding to the target user.

In a possible implementation, the identity authentication apparatus further includes: a first determining module, configured to determine whether the smart wearable device is in a target state before the target payment operation. The second acquisition module is specifically configured to: if yes, obtain, in response to the target payment operation, the target identity authentication information corresponding to the target user.

In a possible implementation, the identity authentication apparatus further includes: a second determining module, configured to determine whether a time interval between first time corresponding to the target payment operation and second time exceeds target duration, where the second time is used to represent time corresponding to case that the smart wearable device performs identity authentication last time and the identity authentication succeeds. The second acquisition module is specifically configured to: if yes, obtain, in response to the target payment operation, the target identity authentication information corresponding to the target user.

In a possible implementation, the identity authentication apparatus further includes a third determining module, configured to determine whether an unworn state exists after the smart wearable device performs identity authentication last time and the identity authentication succeeds. The second acquisition module is specifically configured to: if yes, obtain, in response to the target payment operation, the target identity authentication information corresponding to the target user.

In a possible implementation, the identity authentication apparatus further includes: a second determining module, configured to determine that identity authentication on the target user succeeds if the smart wearable device is not in a target state before the target payment operation, and/or a time interval between first time corresponding to the target payment operation and second time does not exceed target duration, and/or an unworn state does not exist after the smart wearable device performs identity authentication last time and the identity authentication succeeds, where the second time is used to represent time corresponding to a case that the smart wearable device performs identity authentication last time and the identity authentication succeeds.

In a possible implementation, the target identity authentication information includes target human body characteristic information and/or target behavior information; the target human body characteristic information includes at least one of the following: target blood oxygen information, target heart rate information, or target electrocardiogram information that corresponds to the target user; and the target behavior information includes at least one of the following: historical sleep information, historical exercise information, or historical movement track information that is monitored by the smart wearable device in a preset time period before the target payment operation.

In a possible implementation, the first determining module is specifically configured to: if a difference between the target human body characteristic information and a preset human body characteristic information is within a preset range, and/or the target behavior information satisfies a preset condition, determine that the target identity authentication result corresponding to the target user is that identity authentication succeeds, where the preset human body characteristic information is human body characteristic information corresponding to a first user who has payment permission of the smart wearable device.

In a possible implementation, the identity authentication apparatus further includes: a third acquisition module, configured to obtain recorded information corresponding to a first user who has payment permission of the smart wearable device. The first determining module is specifically configured to determine, based on the recorded information and the target identity authentication information, the target identity authentication result corresponding to the target user.

In a possible implementation, the target identity authentication information includes at least one of the following information: target fingerprint information, target face information, target PIN code information, target password information, or target identity code information, where an information type in the target identity authentication information is a part or all of information types in the recorded information.

In a possible implementation, the identity authentication apparatus further includes: a fourth acquisition module, configured to obtain recorded information entered by a first user who has payment permission of the smart wearable device; a fifth acquisition module, configured to obtain an information modification operation of a second user; and a modification module, configured to: when it is determined, based on the recorded information, that identity authentication on the second user succeeds, modify the recorded information in response to the information modification operation.

In a possible implementation, payment software is installed on the smart wearable device, and the target identity authentication result includes that identity authentication on the target user succeeds. The first acquisition module is specifically configured to obtain the target payment operation of the target user based on the payment software, The identity authentication apparatus further includes a display module, configured to display a payment code in the payment software on a display of the smart wearable device.

According to a third aspect, an embodiment of this specification provides a smart wearable device, including a processor and a memory. The processor is connected to the memory. The memory is configured to store executable program code. The processor runs, by reading the executable program code stored in the memory, a program corresponding to the executable program code, to perform the method provided in any one of the first aspect or the possible implementations of the first aspect of the embodiments of this specification.

According to a fourth aspect, an embodiment of this specification provides a computer storage medium. The computer storage medium stores a plurality of instructions, and the instructions are applicable to be loaded by a processor to perform the method provided in any one of the first aspect or the possible implementations of the first aspect of the embodiments of this specification.

According to a fifth aspect, an embodiment of this specification provides a computer program product including instructions. When the computer program product runs on a computer or a processor, the computer or the processor is enabled to perform the identity authentication method provided in any one of the first aspect or the possible implementations of the first aspect of the embodiments of this specification.

In the embodiments of this specification, after obtaining the target payment operation of the target user, the smart wearable device can obtain, in response to the target payment operation, the target identity authentication information corresponding to the target user, and determine, based on the target identity authentication information, the target identity authentication result corresponding to the target user, so that when a user uses the smart wearable device to perform payment, the smart wearable device can perform identity authentication on the user. This not only can ensure asset security of the user, but also can perform identity authentication in a network-free environment, with low resource occupation and a high level of security.

### BRIEF DESCRIPTION OF DRAWINGS

To describe the technical solutions in the embodiments of this specification more clearly, the following briefly describes the accompanying drawings needed in the embodiments. Clearly, the accompanying drawings in the following descriptions show merely some embodiments of this specification, and a person of ordinary skill in the art can still derive other drawings from these accompanying drawings without creative efforts.
FIG. 1 is a schematic diagram illustrating an architecture of an identity authentication system, according to an example embodiment of this specification;
FIG. 2 is a schematic flowchart illustrating an identity authentication method, according to an example embodiment of this specification;
FIG. 3 is a schematic flowchart illustrating another identity authentication method, according to an example embodiment of this specification;
FIG. 4 is a schematic flowchart illustrating another identity authentication method, according to an example embodiment of this specification;
FIG. 5 is a schematic diagram illustrating an implementation framework of an identity authentication method, according to an example embodiment of this specification;
FIG. 6 is a schematic structural diagram illustrating an identity authentication apparatus, according to an example embodiment of this specification; and
FIG. 7 is a schematic structural diagram illustrating a smart wearable device, according to an example embodiment of this specification.

### DESCRIPTION OF EMBODIMENTS

The following clearly and comprehensively describes the technical solutions in the embodiments of this specification with reference to the accompanying drawings in the embodiments of this specification.

The terms "first", "second", "third", etc. in this specification, the claims, and the above-mentioned accompanying drawings are used to distinguish between different objects, and are not used to describe a specific order. In addition, the terms "include" and "have" and any variations thereof are intended to cover a non-exclusive inclusion. For example, a process, method, system, product, or device that includes a series of steps or units is not limited to the listed steps or units, but optionally further includes an unlisted step or unit, or optionally further includes another step or unit inherent to the process, method, product, or device.

It is worthwhile to note that information (including but not limited to user device information, personal user information, etc.), data (including but not limited to data used for analysis, stored data, displayed data, etc.), and a signal in the embodiments of this specification all are authorized by a user or fully authorized by each party. In addition, related data needs to be collected, used, and processed in compliance with relevant laws, regulations and standards of relevant countries and regions. For example, the target identity authentication information, the recorded information, etc. in this specification all are obtained under full authorization.

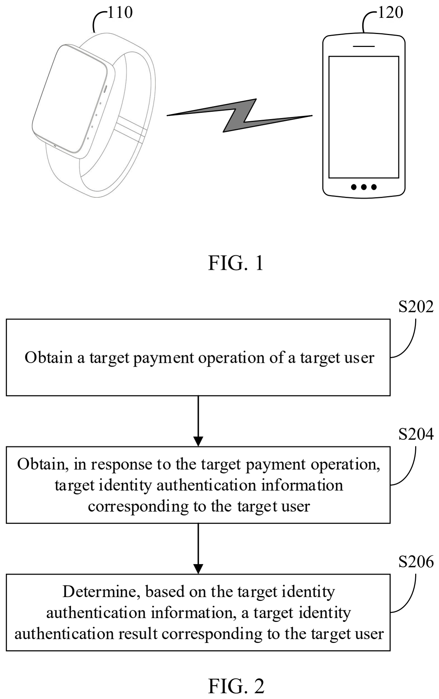

Next, referring to FIG. 1, FIG. 1 is a schematic diagram illustrating an architecture of an identity authentication system, according to an example embodiment of this specification. As shown in FIG. 1, the identity authentication system includes a smart wearable device 110.

The smart wearable device 110 can include but is not limited to a smart band, a smart watch, etc. The smart wearable device 110 can be installed with payment software or can have an NFC payment function, etc., can be bound to a payment account of a user, and implements payment by using funds in the payment account when identity authentication succeeds.

Specifically, after obtaining a target payment operation of a target user, the smart wearable device 110 can obtain, in response to the target payment operation, target identity authentication information corresponding to the target user, and determine, based on the target identity authentication information, a target identity authentication result corresponding to the target user. The target identity authentication information can be target fingerprint information, target face information, target PIN code information, target password information, target identity code information, etc. that is entered by the target user, or can be target human body characteristic information and/or target behavior information that are/is detected by the smart wearable device 110 by using a detection element. This is not limited in this embodiment of this specification. The target human body characteristic information includes at least one of the following: target blood oxygen information, target heart rate information, or target electrocardiogram information that corresponds to the target user. The target behavior information includes at least one of the following: historical sleep information, historical exercise information, or historical movement track information that is monitored by the smart wearable device in a preset time period before the target payment operation.

Further, in addition to having an identity authentication function, the smart wearable device 110 further has functions such as information entry, information deletion, and information modification, which can be but is not limited to entering, when a payment account is bound, restored information of a user who has payment permission of the smart wearable device 110, or modifying and deleting pre-entered recorded information. The recorded information can be but is not limited to including fingerprint information, face information, PIN code information, password information, etc. of a user with payment permission.

Optionally, the identity authentication system can further include a terminal 120. The terminal 120 can include one or more user ends. Software of a user version can be installed in the terminal 120, to implement a function of using, by a user, the software to view information monitored by the smart wearable device, or another function. The terminal 120 can establish a data relationship with a network, and establish a data connection relationship with the smart wearable device 110 by using the network, for example, send recorded information to the smart wearable device 110. Any terminal 120 can be but is not limited to a device such as a mobile phone, a tablet computer, or a notebook computer on which software of a user version is installed.

The above-mentioned identity authentication is not limited to be performed by the smart wearable device 110, and can alternatively be performed by any terminal 120. This is not specifically limited in this embodiment of this specification. The following embodiments are all described by using an example in which the smart wearable device 110 performs the above-mentioned identity authentication.

The network can be a medium that provides a communication link between the smart wearable device 110 and any terminal 120, or can be an Internet that includes a network device and a transmission medium. This is not limited thereto. The transmission medium can be a wired link, for example, but not limited to a coaxial cable, an optical fiber, and a digital subscriber line (DSL); or can be a wireless link, for example, but not limited to wireless fidelity (WiFi), Bluetooth, and a mobile device network.

It can be understood that quantities of smart wearable devices 110 and terminals 120 in the identity authentication system shown in FIG. 1 are merely examples. In specific implementation, the identity authentication system can include any quantity of smart wearable devices and terminals. This is not specifically limited in this embodiment of this specification. For example, and without limitation, the smart wearable device 110 can be a smart wearable device cluster including a plurality of smart wearable devices, and the terminal 120 can be a user end cluster including a plurality of user ends.

With reference to FIG. 1, the following describes an identity authentication method provided in an embodiment of this specification. For details, references can be made to FIG. 2. FIG. 2 is a schematic flowchart illustrating an identity authentication method, according to an example embodiment of this specification. As shown in FIG. 2, the identity authentication method includes the following several steps.

S202: Obtain a target payment operation of a target user.

Specifically, when the target user triggers a payment function on the smart wearable device, for example, when the target user wants to use the smart wearable device to perform NFC payment or invoke payment software, etc. on the smart wearable device to perform payment, the smart wearable device can obtain the target payment operation of the target user.

Optionally, payment software is installed on the smart wearable device. When the target user enters the payment software of the smart wearable device and wants to open a payment code in the payment software for payment, the smart wearable device can obtain, based on the payment software, the target payment operation entered by the target user.

S204: Obtain, in response to the target payment operation, target identity authentication information corresponding to the target user.

Specifically, after obtaining the target payment operation of the target user, the smart wearable device can directly obtain, in response to the target payment operation, the target identity authentication information entered by the target user, for example, but not limited to target fingerprint information, target face information, target PIN code information, target password information, and target identity code information; or obtain the target identity authentication information of the target user based on a detection element, for example, but not limited to target blood oxygen information, target heart rate information, or target electrocardiogram information that corresponds to the target user, and/or at least one type of target behavior information in historical sleep information, historical exercise information, historical movement track information, etc. that are monitored by the smart wearable device in a preset time period before the target payment operation. This is not limited in this embodiment of this specification. The preset time period can be one week, two weeks, one month, etc., which is not limited in this embodiment of this specification.

Optionally, after obtaining the target payment operation of the target user, the smart wearable device can first determine whether the smart wearable device is in a target state before the target payment operation. The target state can be but is not limited to a sleep state, a power-off state, etc. To be specific, after obtaining the target payment operation of the target user, the smart wearable device can first determine whether the smart wearable device is in a sleep state, a power-off state, etc. after a previous payment operation and before the target payment operation. If yes, it can be considered that the current payment operation (the target payment operation) is at a relatively high risk, and identity authentication needs to be performed to ensure security of payment performed by using the smart wearable device. In this case, the target identity authentication information corresponding to the target user needs to be obtained in response to the target payment operation, to implement identity authentication on the target user based on the target identity authentication information, so as to avoid a problem that the target user does not have permission to use the smart wearable device to perform payment, but uses funds bound to the smart wearable device to perform payment, which causes a fund loss to a user corresponding to the smart wearable device.

Optionally, after obtaining the target payment operation of the target user, the smart wearable device can first determine whether a time interval between first time corresponding to the target payment operation and second time exceeds target duration. The second time is used to represent time corresponding to a case that the smart wearable device performs identity authentication last time and the identity authentication succeeds. The target duration can be but is not limited to one day, two days, eight hours, etc. If the time interval between the first time corresponding to the target payment operation and the second time corresponding to the case that the smart wearable device performs identity authentication last time and the identity authentication succeeds exceeds the target duration, that is, the smart wearable device has not performed identity authentication for a long time, it can be considered that the current payment operation (the target payment operation) is at a relatively high risk, and identity authentication needs to be performed to ensure security of payment performed by using the smart wearable device, so as to avoid a problem of a fund loss caused to a user corresponding to the smart wearable device. In this case, the target identity authentication information corresponding to the target user needs to be obtained in response to the target payment operation, to implement identity authentication on the target user based on the target identity authentication information.

Optionally, after obtaining the target payment operation of the target user, the smart wearable device can first determine whether an unworn state exists after the smart wearable device performs identity authentication last time and the identity authentication succeeds. If the unworn state exists after the smart wearable device performs identity authentication last time and the identity authentication succeeds, it is considered that the smart wearable device has been removed before the target payment operation, and the target payment operation is at a risk that the target user is not a first user who has payment permission of the smart wearable device. In this case, the target identity authentication information corresponding to the target user can be obtained in response to the target payment operation, to implement identity authentication on the target user based on the target identity authentication information.

Optionally, after the target payment operation of the target user is obtained, if the smart wearable device is not in a target state before the target payment operation, and/or a time interval between first time corresponding to the target payment operation and second time does not exceed target duration, and/or an unworn state does not exist after the smart wearable device performs identity authentication performed last time and the identity authentication succeeds, it can be considered that the target user is a first user who has payment permission of the smart wearable device. In this case, it can be directly determined that identity authentication on the target user succeeds, and identity authentication no longer needs to be performed on the target user, thereby ensuring efficiency of payment performed by the target user by using the smart wearable device. The target state can be but is not limited to a sleep state, a power-off state, etc. The second time is used to represent time corresponding to a case that the smart wearable device performs identity authentication last time and the identity authentication succeeds.

Next, with continued reference to FIG. 2, as shown in FIG. 2, the identity authentication method further includes S206.

S206: Determine, based on the target identity authentication information, a target identity authentication result corresponding to the target user.

In this embodiment of this specification, after obtaining the target payment operation of the target user, the smart wearable device can obtain, in response to the target payment operation, the target identity authentication information corresponding to the target user, and determine, based on the target identity authentication information, the target identity authentication result corresponding to the target user, so that when a user uses the smart wearable device to perform payment, the smart wearable device can perform identity authentication on the user. This not only can prevent another person from stealing the smart wearable device to perform payment to ensure asset security in the smart wearable device, but also can perform identity authentication in a network-free environment, with low resource occupation and a high level of security.

Optionally, the target identity authentication information includes at least one of the following information: target fingerprint information, target face information, target PIN code information, target password information, or target identity code information. After the target payment operation of the target user is obtained, that is, after the target user triggers the payment function on the smart wearable device, the target identity authentication information entered by the target user can be further received in response to the target payment operation, for example, but not limited to receiving target fingerprint information and/or target face information and/or target PIN code information and/or target password information and/or target identity code information that are entered by the target user, and matching the target identity authentication information with pre-stored recorded information of a first user who has payment permission of the smart wearable device, to obtain the target identity authentication result corresponding to the target user. If the target identity authentication information can match the recorded information, that is, the recorded information includes same information as the target identity authentication information, it can be considered that the target user has payment permission of the smart wearable device. In this case, it can be determined that identity authentication on the target user succeeds, and the payment function on the smart wearable device is enabled, for example, but not limited to displaying a payment code in the payment software or invoking an NFC payment card to complete payment that the target user wants to perform. If the target identity authentication information cannot match the recorded information, that is, the recorded information does not include same information as the target identity authentication information, it can be considered that the target user does not have payment permission of the smart wearable device. In this case, it can be determined that identity authentication on the target user fails. An information type in the target identity authentication information can be but is not limited to a part or all of information types in the recorded information.

In this embodiment of this specification, after the target user triggers the payment function on the smart wearable device, that is, after the target payment operation of the target user is obtained, the target identity authentication information entered by the target user can be further obtained in response to the target payment operation, to perform active authentication on an identity of the target user, that is, whether the target user has payment permission of the smart wearable device. In this process, the smart wearable device does not need to be connected to a network, and the identity authentication process can be independent of a service and another module and be separately performed in a secure environment, which not only can satisfy a requirement of a resource shortage of the smart wearable device, but also can avoid a case that a fund loss is easily caused by payment performed by using the smart wearable device.

Optionally, the target identity authentication information includes target human body characteristic information and/or target behavior information. The target human body characteristic information includes at least one of the following: target blood oxygen information, target heart rate information, or target electrocardiogram information that corresponds to the target user. The target behavior information includes at least one of the following: historical sleep information, historical exercise information, or historical movement track information that is monitored by the smart wearable device in a preset time period before the target payment operation. The preset time period can be one week, two weeks, one month, etc., which is not limited in this embodiment of this specification.

Further, when the target identity authentication information includes the target human body characteristic information and/or the target behavior information, S206 that the target identity authentication result corresponding to the target user is determined based on the target identity authentication information can include the following: If a difference between the target human body characteristic information and preset human body characteristic information is within a preset range, and/or if the target behavior information satisfies a preset condition, it can be considered that the target user is a first user who has payment permission of the smart wearable device. In this case, it can be determined that the target identity authentication result corresponding to the target user is identity authentication succeeds. The preset human body characteristic information is human body characteristic information corresponding to the first user who has payment permission of the smart wearable device, for example, but not limited to including blood oxygen information, heart rate information, blood oxygen information, or electrocardiogram information that corresponds to the first user. The preset range can be set based on an actual situation, which is not limited in this embodiment of this specification. The target behavior information can satisfy the preset condition, which can be but is not limited to that a fluctuation range of historical sleep information and/or historical exercise information and/or historical movement track information in the preset time period is with a preset fluctuation range. This is not limited in this embodiment of this specification.

For example, the target behavior information of the target user includes historical sleep information and historical movement track information that are monitored by the smart wearable device in one week before the target payment operation. If both the historical sleep information and the historical movement track information in the week do not fluctuate greatly on a daily basis, for example, but not limited to the following: sleep information and movement track information that are monitored by the smart wearable device each day in one week before the target payment operation are similar, that is, the target behavior information satisfies the preset condition, it can be considered that a wearer of the smart wearable device is always the first user with payment permission. In this case, it can be determined that the target identity authentication result corresponding to the target user is that identity authentication succeeds. If the historical sleep information or the historical movement track information in the week fluctuates greatly, for example, but not limited to the following: sleep information or movement track information detected by the smart wearable device on a certain day in the week before the target payment operation suddenly changes, it can be considered that a wearer of the smart wearable device changes and there is a relatively large risk that the target user is not the first user with payment permission. In this case, it can be determined that the target identity authentication result corresponding to the target user is that identity authentication fails.

In this specification embodiment, after the target user triggers the payment function on the smart wearable device, that is, after the target payment operation of the target user is obtained, the target user does not need to enter a password, a fingerprint, etc. to perform authentication, and the target identity authentication information of the target user can be directly obtained in response to the target payment operation to perform passive authentication on an identity of the target user, that is, whether the target user has payment permission of the smart wearable device. In this process, the smart wearable device does not need to be connected to a network, and after triggering the payment function on the smart wearable device, the target user does not need to perform another authentication operation. The identity authentication process can be independent of a service and another module and be separately performed in a secure environment, which not only can satisfy a requirement of a resource shortage of the smart wearable device, but also can avoid a case that a fund loss is easily caused by payment performed by using the smart wearable device. In addition, the target user does not need to perform an additional authentication operation, to implement passive authentication payment, thereby improving identity authentication efficiency and payment experience of the target user.

It can be understood that, in this embodiment of this specification, a process of determining the target identity authentication result corresponding to the target user can be implemented by using an active authentication process, a passive authentication process, or a process obtained by combining any at least one active authentication process with any at least one passive authentication process. This is not limited in this embodiment of this specification.

Optionally, the payment software is installed on the smart wearable device, and the target identity authentication result includes that identity authentication on the target user succeeds. After the target payment operation of the target user is obtained based on the payment software, that is, the target user enters the payment software installed on the smart wearable device and invokes the payment code in the payment software by using the target payment operation such as tapping, the target identity authentication information corresponding to the target user can be acquired in response to the target payment operation, and the target identity authentication result corresponding to the target user is determined based on the target identity authentication information. Then, the payment code in the payment software is displayed on a display of the smart wearable device only when identity authentication on the target user succeeds, so as to prevent another person from stealing the payment code in the payment software in the smart wearable device, thereby ensuring asset security of a user bound to the smart wearable device.

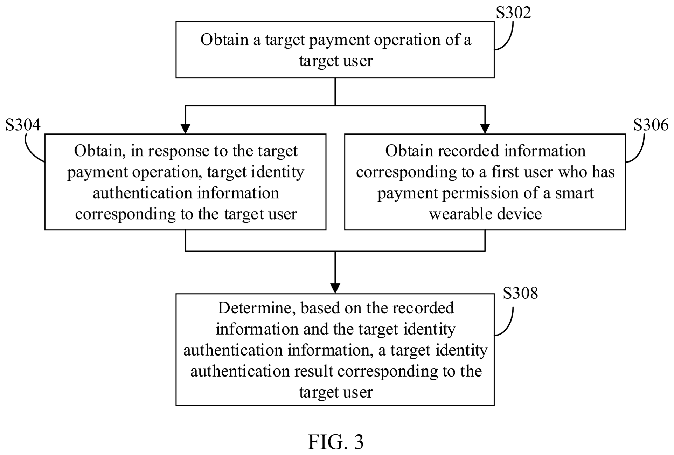

Next, referring to FIG. 3, FIG. 3 is a schematic flowchart of another identity authentication method, according to an example embodiment of this specification. As shown in FIG. 3, the identity authentication method includes the following several steps.

S302: Obtain a target payment operation of a target user.

Specifically, S302 is the same as S202, and details are omitted here for simplicity.

S304: Obtain, in response to the target payment operation, target identity authentication information corresponding to the target user.

Specifically, S304 is the same as S204, and details are omitted here for simplicity.

S306: Obtain recorded information corresponding to a first user who has payment permission of the smart wearable device.

Specifically, after the target payment operation of the target user is obtained, the target payment operation can be further responded to, which can be but is not limited to obtaining, by using a network from a terminal connected to the smart wearable device, the recorded information corresponding to the first user who has payment permission of the smart wearable device, or directly invoking the recorded information corresponding to the first user that is pre-stored in the smart wearable device. The recorded information can be but is not limited to at least one of the following information: fingerprint information, face information, PIN code information, password information, or identity code information that corresponds to the first user.

S308: Determine, based on the recorded information and the target identity authentication information, a target identity authentication result corresponding to the target user.

Specifically, the target identity authentication information can be but is not limited to including at least one of the following information: target fingerprint information, target face information, target PIN code information, target password information, or target identity code information. An information type in the target identity authentication information is a part or all of information types in the recorded information. After the recorded information and the target identity authentication information are obtained, the target identity authentication information can be directly matched with the recorded information to obtain the target identity authentication result corresponding to the target user. If the target identity authentication information can match the recorded information, that is, the recorded information includes same information as the target identity authentication information, it can be considered that the target user has payment permission of the smart wearable device. In this case, it can be determined that identity authentication on the target user succeeds, and the payment function on the smart wearable device is enabled, for example, but not limited to displaying a payment code in the payment software or invoking an NFC payment card to complete payment that the target user wants to perform. If the target identity authentication information cannot match the recorded information, that is, the recorded information does not include same information as the target identity authentication information, it can be considered that the target user does not have payment permission of the smart wearable device. In this case, it can be determined that identity authentication on the target user fails.

In this embodiment of this specification, the first user who has payment permission of the smart wearable device can enter, in advance, the corresponding recorded information to the terminal connected to the smart wearable device, or directly enter the corresponding recorded information to the smart wearable device, so as to implement identity authentication corresponding to the target user based on the recorded information and the target identity authentication information corresponding to the target user who wants to use the smart wearable device, thereby avoiding a fund loss caused by payment performed by using the smart wearable device.

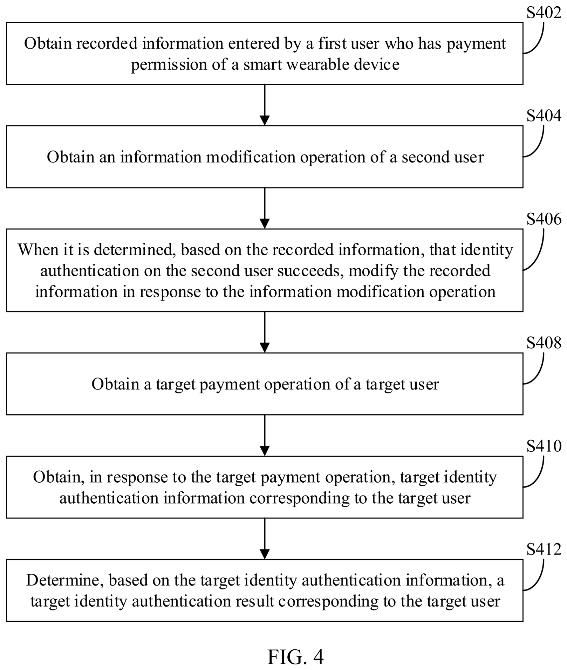

Next, referring to FIG. 4, FIG. 4 is a schematic flowchart of another identity authentication method, according to an example embodiment of this specification. As shown in FIG. 4, the identity authentication method includes the following several steps.

S402: Obtain recorded information entered by a first user that has payment permission of the smart wearable device.

Specifically, when binding a payment account, the smart wearable device can but is not limited to obtaining, by using a network from a terminal connected to the smart wearable device, the recorded information entered by the first user who has payment permission of the smart wearable device, or directly receiving the recorded information entered by the first user whose has payment permission of the smart wearable device by using an information entry module on the smart wearable device, for example, but not limited to a user interface.

S404: Obtain an information modification operation of a second user

Specifically, when the second user wants to modify or delete the recorded information in the smart wearable device, the smart wearable device can receive the information modification operation entered by the second user.

It can be understood that the second user can be the first user who has payment permission of the smart wearable device, or can be another user. This is not limited in this embodiment of this specification.

S406: When it is determined, based on the recorded information, that identity authentication on the second user succeeds, modify the recorded information in response to the information modification operation.

Specifically, when it is determined, based on the recorded information, that identity authentication on the second user succeeds, for example, but not limited to a case that the second user is the first user who has payment permission of the smart wearable device, or that the second user has been authorized by the first user that identity authenticate succeeds, the recorded information can be modified in response to the information modification operation of the second user.

It can be understood that, the modifying the recorded information can be but is not limited to adding fingerprint information, face information, PIN code information, password information, or identity code information of the second user, or deleting or modifying fingerprint information, face information, PIN code information, password information, or identity code information that is entered by the first user.

S408: Obtain a target payment operation of a target user.

Specifically, S408 is the same as S202, and details are omitted here for simplicity.

S410: Obtain, in response to the target payment operation, target identity authentication information corresponding to the target user.

Specifically, S410 is the same as S204, and details are omitted here for simplicity.

S412: Determine, based on the target identity authentication information, a target identity authentication result corresponding to the target user.

Specifically, an implementation process of S412 is consistent with that of S206 or S308, and details are omitted here for simplicity.

In this embodiment of this specification, in addition to an identity authentication function, functions such as information entry, information deletion, and information modification can be further implemented on the smart wearable device, so that an authentication solution can be added, modified, or deleted at low costs. For example, and without limitation, a solution of performing identity authentication by using password information is deployed on the smart wearable device, and it is desired to add, to the smart wearable device, a solution of performing identity authentication by using identity code information. In this case, the first user who has payment permission of the smart wearable device can be directly allowed to enter corresponding identity code information, so that without additional costs, identity authentication based on the password information and identity authentication based on the identity code information can be simultaneously implemented on the smart wearable device.

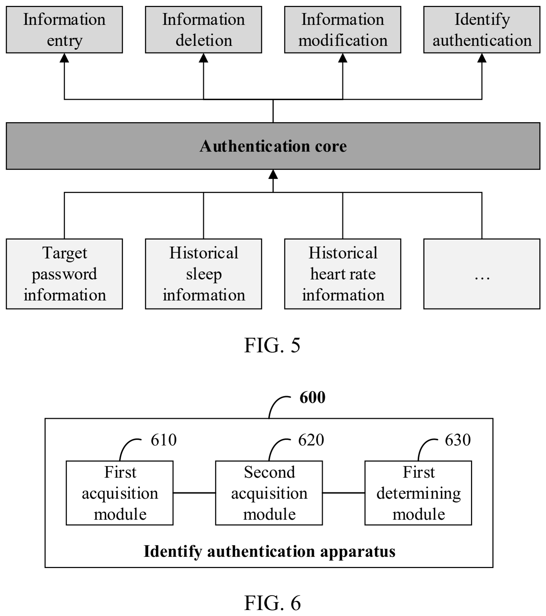

Next, referring to FIG. 5, FIG. 5 is a schematic diagram illustrating an implementation framework of an identity authentication method, according to an example embodiment of this specification. As shown in FIG. 5, the identity authentication framework is deployed on a smart wearable device to satisfy that the smart wearable device has functions of entering information, deleting information, modifying information, and performing identity authentication based on target password information, historical sleep information, target heart rate information, etc. corresponding to a target user, and an identity authentication solution on the smart wearable device can be added, modified, or deleted at low costs. The identity authentication framework is applicable to an offline mode, and an authentication core of the identity authentication framework running independent of a service and another module on the smart wearable device on the smart wearable device, and a running environment is secure, so that a requirement of a resource shortage of the smart wearable device can be fully met.

Next, referring to FIG. 6, FIG. 6 is a schematic structural diagram illustrating an identity authentication apparatus, according to an example embodiment of this specification. The identity authentication apparatus 600 is applied to a smart wearable device. As shown in FIG. 6, the identity authentication apparatus 600 includes: a first acquisition module 610, configured to obtain a target payment operation of a target user; a second acquisition module 620, configured to obtain, in response to the target payment operation, target identity authentication information corresponding to the target user; and a first determining module 630, configured to determine, based on the target identity authentication information, a target identity authentication result corresponding to the target user.

In a possible implementation, the identity authentication apparatus 600 further includes: a first determining module, configured to determine whether the smart wearable device is in a target state before the target payment operation. The second acquisition module 620 is specifically configured to: if yes, obtain, in response to the target payment operation, the target identity authentication information corresponding to the target user.

In a possible implementation, the identity authentication apparatus 600 further includes: a second determining module, configured to determine whether a time interval between first time corresponding to the target payment operation and second time exceeds target duration, where the second time is used to represent time corresponding to case that the smart wearable device performs identity authentication last time and the identity authentication succeeds. The second acquisition module 620 is specifically configured to: if yes, obtain, in response to the target payment operation, the target identity authentication information corresponding to the target user.

In a possible implementation, the identity authentication apparatus 600 further includes a third determining module, configured to determine whether an unworn state exists after the smart wearable device performs identity authentication last time and the identity authentication succeeds. The second acquisition module 620 is specifically configured to: if yes, obtain, in response to the target payment operation, the target identity authentication information corresponding to the target user.

In a possible implementation, the identity authentication apparatus 600 further includes: a second determining module, configured to determine that identity authentication on the target user succeeds if the smart wearable device is not in a target state before the target payment operation, and/or a time interval between first time corresponding to the target payment operation and second time does not exceed target duration, and/or an unworn state does not exist after the smart wearable device performs identity authentication last time and the identity authentication succeeds, where the second time is used to represent time corresponding to a case that the smart wearable device performs identity authentication last time and the identity authentication succeeds.

In a possible implementation, the target identity authentication information includes target human body characteristic information and/or target behavior information; the target human body characteristic information includes at least one of the following: target blood oxygen information, target heart rate information, or target electrocardiogram information that corresponds to the target user; and the target behavior information includes at least one of the following: historical sleep information, historical exercise information, or historical movement track information that is monitored by the smart wearable device in a preset time period before the target payment operation.

In a possible implementation, the first determining module 630 is specifically configured to: if a difference between the target human body characteristic information and a preset human body characteristic information is within a preset range, and/or the target behavior information satisfies a preset condition, determine that the target identity authentication result corresponding to the target user is that identity authentication succeeds, where the preset human body characteristic information is human body characteristic information corresponding to a first user who has payment permission of the smart wearable device.

In a possible implementation, the identity authentication apparatus 600 further includes: a third acquisition module, configured to obtain recorded information corresponding to a first user who has payment permission of the smart wearable device. The first determining module 630 is specifically configured to determine, based on the recorded information and the target identity authentication information, the target identity authentication result corresponding to the target user.

In a possible implementation, the target identity authentication information includes at least one of the following information: target fingerprint information, target face information, target PIN code information, target password information, or target identity code information, where an information type in the target identity authentication information is a part or all of information types in the recorded information.

In a possible implementation, the identity authentication apparatus 600 further includes: a fourth acquisition module, configured to obtain recorded information entered by a first user who has payment permission of the smart wearable device; a fifth acquisition module, configured to obtain an information modification operation of a second user; and a modification module, configured to: when it is determined, based on the recorded information, that identity authentication on the second user succeeds, modify the recorded information in response to the information modification operation.

In a possible implementation, payment software is installed on the smart wearable device, and the target identity authentication result includes that identity authentication on the target user succeeds. The first acquisition module 610 is specifically configured to obtain the target payment operation of the target user based on the payment software, The identity authentication apparatus 600 further includes a display module, configured to display a payment code in the payment software on a display of the smart wearable device.

The division of the modules in the identity authentication apparatus is merely used as an example for description. In another embodiment, the identity authentication apparatus can be divided into different modules based on a requirement, so as to complete all or a part of functions of the identity authentication apparatus. Each module in the identity authentication apparatus provided in this embodiment of this specification can be implemented in a form of a computer program. The computer program can run on a smart wearable device, a terminal, or a server. A program module formed by the computer program can be stored in a memory of a smart wearable device, a terminal, or a server. When the computer program is executed by the processor, all or a part of the steps of the identity authentication method described in the embodiments of this specification are implemented.

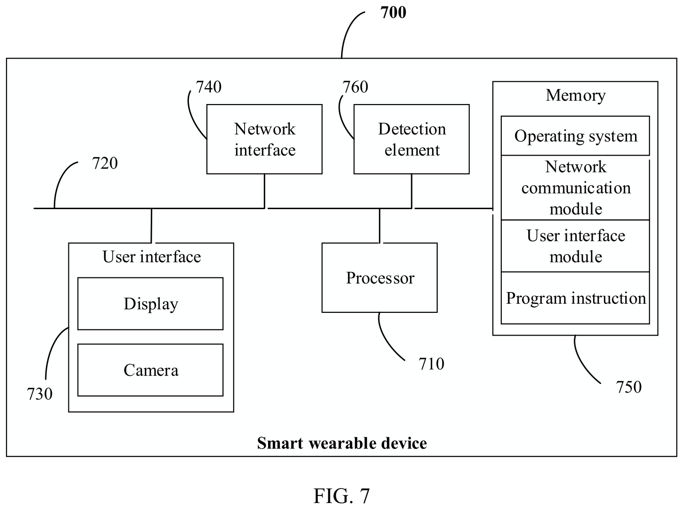

Next, referring to FIG. 7, FIG. 7 is a schematic structural diagram illustrating a smart wearable device, according to an example embodiment of this specification. As shown in FIG. 7, the smart wearable device 700 can include at least one processor 710, at least one communication bus 720, a user interface 730, at least one network interface 740, a memory 750, and a detection element 760.

The communication bus 720 can be configured to implement connection and communication between the above-mentioned components.

The user interface 730 can include a display and a camera, and the optionally, the user interface can further include a standard wired interface or wireless interface.

The network interface 740 can optionally include a Bluetooth module, a near field communication (NFC) module, a wireless fidelity Wi-Fi) module, etc.

The detection element 760 can be but is not limited to a blood oxygen sensor, a heart rate sensor, a multi-axis sensor, and is configured to detect human body characteristic information and/or behavior information of a user.

The processor 710 can include one or more processing cores. The processor 710 is connected to all parts of the entire smart wearable device 700 by using various interfaces and lines, and performs various functions and processing data of the smart wearable device 700 by running or executing instructions, a program, a code set, or an instruction set stored in the memory 750, and by invoking data stored in the memory 750. Optionally, the processor 710 can be implemented in at least one hardware form of a digital signal processor (DSP), a field-programmable gate array (FPGA), or a programmable logic array (PLA). The processor 710 can be integrated with one or a combination of a central processing unit (CPU), a graphics processing unit (GPU), a modem, etc. The CPU mainly processes an operating system, a user interface, an application program, etc. The GPU is configured to render and draw content that needs to be displayed on a display. The modem is configured to process wireless communication. It can be understood that the modem does not need to be integrated into the processor 710, and is separately implemented by using a chip.

The memory 750 can include a random access memory (RAM), or can include a read-only memory (ROM). Optionally, the memory 750 includes a non-transitory computer-readable medium. The memory 750 may be configured to store instructions, programs, codes, code sets, or instruction sets. The can include a program storage area and a data storage area. The storage program area can store instructions used to implement an operating system, instructions used to implement at least one function (for example, an acquisition function, a determining function, or a determining function), instructions used to implement the above-mentioned method embodiments, etc. The data storage area can store data, etc. in the above-mentioned method embodiments. Optionally, the memory 750 can alternatively be at least one storage apparatus located far away from the processor 710. As shown in FIG. 7, the memory 750 serving as a computer storage medium can include an operating system, a network communication module, a user interface module, and a program instruction.

Specifically, the processor 710 can be configured to invoke the program instruction stored in the memory 750, and specifically perform the following operations: obtaining a target payment operation of a target user; obtaining, in response to the target payment operation, target identity authentication information corresponding to the target user; and determining, based on the target identity authentication information, a target identity authentication result corresponding to the target user.

In some possible embodiments, after obtaining the target payment operation of the target user, and before obtaining, in response to the target payment operation, the target identity authentication information corresponding to the target user, the processor 710 is further configured to determine whether the smart wearable device is in a target state before the target payment operation. When obtaining, in response to the target payment operation, the target identity authentication information corresponding to the target user, the processor 710 is specifically configured to: if yes, obtain, in response to the target payment operation, the target identity authentication information corresponding to the target user.

In some possible embodiments, after obtaining the target payment operation of the target user, and before obtaining, in response to the target payment operation, the target identity authentication information corresponding to the target user, the processor 710 is further configured to determine whether a time interval between first time corresponding to the target payment operation and second time exceeds target duration, where the second time is used to represent time corresponding to a case that the smart wearable device performs identity authentication last time and the identity authentication succeeds. When obtaining, in response to the target payment operation, the target identity authentication information corresponding to the target user, the processor 710 is specifically configured to: if yes, obtain, in response to the target payment operation, the target identity authentication information corresponding to the target user.

In some possible embodiments, after obtaining the target payment operation of the target user, and before obtaining, in response to the target payment operation, the target identity authentication information corresponding to the target user, the processor 710 is further configured to determine whether an unworn state exists after the smart wearable device performs identity authentication last time and the identity authentication succeeds. When obtaining, in response to the target payment operation, the target identity authentication information corresponding to the target user, the processor 710 is specifically configured to: if yes, obtain, in response to the target payment operation, the target identity authentication information corresponding to the target user.

In some possible embodiments, after obtaining the target payment operation of the target user, the processor 710 is further configured to determine that identity authentication on the target user succeeds if the smart wearable device is not in a target state before the target payment operation, and/or a time interval between first time corresponding to the target payment operation and second time does not exceed target duration, and/or an unworn state does not exist after the smart wearable device performs identity authentication last time and the identity authentication succeeds, where the second time is used to represent time corresponding to a case that the smart wearable device performs identity authentication last time and the identity authentication succeeds.

In some possible embodiments, the target identity authentication information includes target human body characteristic information and/or target behavior information. The target human body characteristic information includes at least one of the following: target blood oxygen information, target heart rate information, or target electrocardiogram information that corresponds to the target user. The target behavior information includes at least one of the following: historical sleep information, historical exercise information, or historical movement track information that is monitored by the smart wearable device in a preset time period before the target payment operation.

In some possible embodiments, when determining, based on the target identity authentication information, the target identity authentication result corresponding to the target user, the processor 710 is specifically configured to: if a difference between the target human body characteristic information and preset human body characteristic information is within a preset range, and/or the target behavior information satisfies a preset condition, determine that the target identity authentication result corresponding to the target user is that identity authentication succeeds, where the preset human body characteristic information is human body characteristic information corresponding to a first user who has payment permission of the smart wearable device.

In some possible embodiments, before determining, based on the target identity authentication information, the target identity authentication result corresponding to the target user, the processor 710 is further configured to obtain recorded information corresponding to a first user who has payment permission of the smart wearable device. When determining, based on the target identity authentication information, the target identity authentication result corresponding to the target user, the processor 710 is specifically configured to determine, based on the recorded information and the target identity authentication information, the target identity authentication result corresponding to the target user.

In a possible implementation, the target identity authentication information includes at least one of the following information: target fingerprint information, target face information, target PIN code information, target password information, or target identity code information, where an information type in the target identity authentication information is a part or all of information types in the recorded information.

In a possible implementation, before obtaining the target payment operation of the target user, the processor 710 is further configured to: obtain recorded information entered by a first user who has payment permission of the smart wearable device; obtain an information modification operation of a second user; and when it is determined, based on the recorded information, that identity authentication on the second user succeeds, modify the recorded information in response to the information modification operation.

In a possible implementation, payment software is installed on the smart wearable device, and the target identity authentication result includes that identity authentication on the target user succeeds. When obtaining the target payment operation of the target user, the processor 710 is specifically configured to obtain the target payment operation of the target user based on the payment software. After determining, based on the target identity authentication information, the target identity authentication result corresponding to the target user, the processor 710 is further configured to display a payment code in the payment software on a display of the smart wearable device.

An embodiment of this specification further provides a computer-readable storage medium. The computer-readable storage medium stores instructions, and when the instructions are run on a computer or a processor, the computer or the processor is enabled to perform one or more steps in the above-mentioned embodiments. When each component module in the identity authentication apparatus is implemented in a form of a software functional unit and sold or used as an independent product, the component module can be stored in a computer-readable storage medium.

All or some of the above-mentioned embodiments can be implemented by software, hardware, firmware, or any combination thereof. When software is used for implementation, all or some of the above-mentioned embodiments can be implemented in a form of a computer program product. The computer program product includes one or more computer instructions. When the computer program instructions are loaded and executed on a computer, all or some of the procedures or functions according to the embodiments of this specification are generated. The computer can be a general-purpose computer, a dedicated computer, a computer network, or another programmable apparatus. The computer instructions can be stored in a computer-readable storage medium, or transmitted by using the computer-readable storage medium. The computer instructions can be transmitted from one website site, computer, server, or data center to another website site, computer, server, or data center in a wired (for example, a coaxial cable, an optical fiber, a digital subscriber line (DSL)) or wireless (for example, infrared, wireless, microwave) way. The computer-readable storage medium can be any available medium that can be accessed by a computer, or a data storage device such as a server or a data center that integrates one or more available media. The available medium can be a magnetic medium (for example, a floppy disk, a hard disk, or a magnetic tape), an optical medium (for example, a digital versatile disc (DVD)), or a semiconductor medium (for example, a solid state disk (SSD)).

A person of ordinary skill in the art can understand that all or some procedures in the methods in the above-mentioned embodiments can be implemented by a computer program instructing related hardware. The program can be stored in a computer-readable storage medium. When the program is executed, the procedures in the above-mentioned method embodiments can be included. The above-mentioned storage medium includes any medium that can store program code, such as a ROM, a RAM, a magnetic disk, or an optical disc. Without conflict, the technical features in the embodiments and the implementation solutions can be randomly combined.

The above-mentioned embodiments are merely described in a preferred embodiment way of this specification, and are not intended to limit the scope of this specification. Without departing from the design spirit of this specification, various modifications and improvements made by a person of ordinary skill in the art to the technical solutions of this specification fall within the protection scope determined in the claims.

Specific embodiments of this specification are described above. Other embodiments fall within the scope of the appended claims. In some cases, the actions or steps described in the claims and this specification can be performed in an order different from that in the embodiments described in this specification and desired results can still be implemented. In addition, the processes depicted in the accompanying drawings do not necessarily need a specific order or a sequential order to achieve the desired results. In some implementations, multi-tasking and parallel processing are feasible or may be advantageous.

## Claims

1. An identity authentication method, wherein the method is applied to a smart wearable device, and the method comprises:
obtaining, by the smart wearable device, a target payment operation of a target user;
obtaining, by the smart wearable device in response to the target payment operation, target identity authentication information corresponding to the target user; and
determining, by the smart wearable device based on the target identity authentication information, a target identity authentication result corresponding to the target user.

2. The method according to claim 1, wherein after obtaining, by the smart wearable device, the target payment operation of the target user, and before obtaining, by the smart wearable device in response to the target payment operation, the target identity authentication information corresponding to the target user, the method further comprises:
determining whether the smart wearable device is in a target state before the target payment operation; and
obtaining, by the smart wearable device in response to the target payment operation, the target identity authentication information corresponding to the target user comprises:
if yes, obtaining, in response to the target payment operation, the target identity authentication information corresponding to the target user.

3. The method according to claim 1, wherein after obtaining, by the smart wearable device, the target payment operation of the target user, and before obtaining, by the smart wearable device in response to the target payment operation, the target identity authentication information corresponding to the target user, the method further comprises:
determining whether a time interval between first time corresponding to the target payment operation and second time is greater than target duration, wherein the second time is used to represent time corresponding to a case that the smart wearable device performs identity authentication last time and the identity authentication succeeds; and
obtaining, by the smart wearable device in response to the target payment operation, the target identity authentication information corresponding to the target user comprises:
if yes, obtaining, in response to the target payment operation, the target identity authentication information corresponding to the target user.

4. The method according to claim 1, wherein after obtaining, by the smart wearable device, the target payment operation of the target user, and before obtaining, by the smart wearable device in response to the target payment operation, the target identity authentication information corresponding to the target user, the method further comprises:
determining whether an unworn state exists after the smart wearable device performs identity authentication last time and the identity authentication succeeds; and
obtaining, by the smart wearable device in response to the target payment operation, the target identity authentication information corresponding to the target user comprises:
if yes, obtaining, in response to the target payment operation, the target identity authentication information corresponding to the target user.

5. The method according to any one of claims 1 to 4, wherein after obtaining, by the smart wearable device, the target payment operation of the target user, the method further comprises:
determining that identity authentication on the target user succeeds if the smart wearable device is not in a target state before the target payment operation, and/or a time interval between first time corresponding to the target payment operation and second time does not exceed target duration, and/or an unworn state does not exist after the smart wearable device performs identity authentication last time and the identity authentication succeeds, wherein the second time is used to represent time corresponding to a case that the smart wearable device performs identity authentication last time and the identity authentication succeeds.

6. The method according to claim 1, wherein the target identity authentication information comprises target human body characteristic information and/or target behavior information; the target human body characteristic information comprises at least one of the following: target blood oxygen information, target heart rate information, or target electrocardiogram information that corresponds to the target user; and the target behavior information comprises at least one of the following: historical sleep information, historical exercise information, or historical movement track information that is monitored by the smart wearable device in a preset time period before the target payment operation.

7. The method according to claim 6, wherein determining, by the smart wearable device based on the target identity authentication information, the target identity authentication result corresponding to the target user comprises:
if a difference between the target human body characteristic information and a preset human body characteristic information is within a preset range, and/or the target behavior information satisfies a preset condition, determining, by the smart wearable device, that the target identity authentication result corresponding to the target user is that identity authentication succeeds, wherein the preset human body characteristic information is human body characteristic information corresponding to a first user who has payment permission of the smart wearable device.

8. The method according to claim 1, wherein before determining, by the smart wearable device based on the target identity authentication information, the target identity authentication result corresponding to the target user, the method further comprises:
obtaining recorded information corresponding to a first user who has payment permission of the smart wearable device; and
determining, by the smart wearable device based on the target identity authentication information, the target identity authentication result corresponding to the target user comprises:
determining, by the smart wearable device based on the recorded information and the target identity authentication information, the target identity authentication result corresponding to the target user.

9. The method according to claim 8, wherein the target identity authentication information comprises at least one of the following information: target fingerprint information, target face information, target PIN code information, target password information, or target identity code information, wherein an information type in the target identity authentication information is a part or all of information types in the recorded information.

10. The method according to claim 1, wherein before obtaining, by the smart wearable device, the target payment operation of the target user, the method further comprises:
obtaining recorded information entered by a first user who has payment permission of the smart wearable device;
obtaining an information modification operation of a second user; and
when it is determined, based on the recorded information, that identity authentication on the second user succeeds, modifying the recorded information in response to the information modification operation.

11. The method according to claim 1, wherein payment software is installed on the smart wearable device, and the target identity authentication result comprises that identity authentication on the target user succeeds;
obtaining, by the smart wearable device, the target payment operation of the target user comprises:
obtaining, by the smart wearable device, the target payment operation of the target user based on the payment software; and
after determining, by the smart wearable device based on the target identity authentication information, the target identity authentication result corresponding to the target user, the method further comprises:
displaying a payment code in the payment software on a display of the smart wearable device.

12. An identity authentication apparatus, wherein the apparatus is applied to a smart wearable device, and the apparatus comprises:
a first acquisition module, configured to obtain a target payment operation of a target user;
a second acquisition module, configured to obtain, in response to the target payment operation, target identity authentication information corresponding to the target user; and
a first determining module, configured to determine, based on the target identity authentication information, a target identity authentication result corresponding to the target user.

13. A smart wearable device, comprising a processor and a memory, wherein
the processor is connected to the memory;
the memory is configured to store executable program code; and
the processor runs, by reading the executable program code stored in the memory, a program corresponding to the executable program code, to perform the method according to any one of claims 1 to 11.

14. A computer storage medium, wherein the computer storage medium stores a plurality of instructions, and the instructions are applicable to be loaded by a processor to perform the method according to any one of claims 1 to 11.

15. A computer program product comprising instructions, wherein when the computer program product runs on a computer or a processor, the computer or the processor is enabled to perform the identity authentication method according to any one of claims 1 to 11.
